# EUROPÄISCHE PATENTSCHRIFT

(11) **EP 0 809 723 B1**
(45) Veröffentlichungstag und Bekanntmachung des Hinweises auf die Patenterteilung: **28.08.2002**
(21) Anmeldenummer: 96902861.2
(22) Anmeldetag: 13.02.1996
(51) Int. Cl.: D01F 6/70

(54) **Verfahren und Vorrichtung zum Schmelzspinnen von Polyurethan und/oder Polyurethanharnstoff**
Process and apparatus for the melt spinning of polyurethane and/or polyurethane urea
Procédé de filature à chaud de polyuréthane et/ou polyuréthane-urée, et dispositif pour ce procédé

(30) Priorität: 13.02.1995 DE 19504671
(43) Veröffentlichungstag der Anmeldung: 03.12.1997
(73) Patentinhaber: Inventa-Fischer GmbH, 13509 Berlin (DE)
(72) Erfinder: SCHAUER, Gottfried, D-01217 Dresden (DE); BRÄUER, Matthias, D-01277 Dresden (DE); BELLMANN, Cornelia, D-01187 Dresden (DE); LEHMANN, Dieter, D-01157 Dresden (DE); TÄNDLER, Bernhard, D-01796 Struppen (DE); HAGEN, Rainer, D-13465 Berlin (DE); WEGER, Friedrich, D-14055 Berlin (DE)
(74) Vertreter: Pfenning, Meinig & Partner
(86) Internationale Anmeldenummer: DE9600235
(87) Internationale Veröffentlichungsnummer: WO96025539

(56) Entgegenhaltungen:
- EP-A- 0 553 944
- EP-A- 0 592 668
- EP-A- 0 679 738

## Beschreibung

Die Erfindung betrifft ein Verfahren zum Schmelzspinnen von Polyurethan- und/oder Polyurethanharnstoff, bei dem ein Prepolymer hergestellt wird, das ein Schmelzhilfsmittel enthält, eine Vorrichtung zur Durchführung des Verfahrens und die mit diesem Verfahren hergestellten Fäden.

Aus der EP 0 553 944 ist eine thermostabil verarbeitbare Schmelze von Polyurethan- und/oder Polyurethanharnstoffelastomeren bekannt. Diese Schmelze wird hergestellt durch eine Polyaddition bzw. Aufbaureaktion von längerkettigen Diolen mit Diisocyanat, Kettenverlängerern sowie einem polaren Gel- und/oder Schmelzhilfsmittel. Als Gel- und/oder Schmelzhilfsmittel wird hierbei Carbonsäureamid vorgeschlagen. In dieser Anmeldung wird weiter beschrieben, daß diese Schmelze zu geformten Artikeln weiterverarbeitet werden kann. Als Verfahren wird hierbei unter anderem Schmelzspinnen erwähnt. Es sind jedoch keine weiteren Einzelheiten offenbart, wie dieses Schmelzspinnen dieser Schmelze erfolgen soll.

Es hat sich gezeigt, daß es nur sehr bedingt möglich ist, die gemäß der EP 0 553 944 herstellbare Schmelze für das Schmelzspinnen zu verwenden. Entweder war ein Verspinnen nicht möglich, oder es wurden nur Fäden mit nicht ausreichenden physikalischen Eigenschaften erhalten.

Ausgehend hiervon, ist es deshalb die Aufgabe der vorliegenden Erfindung, ein Verfahren zum Schmelzspinnen von Polyurethan- und/oder Polyurethanharnstoffelastomeren anzugeben, mit dem Fäden erhalten werden, die vergleichbare physikalische Eigenschaften aufweisen, wie sie bisher durch Lösungsmittelspinnen erreicht werden.

Die Erfindung wird verfahrensgemäß durch die kennzeichnenden Merkmale des Anspruches 1 gelöst in bezug auf die Vorrichtung durch die Merkmale des Anspruches 23. Die Unteransprüche zeigen vorteilhafte Weiterbildungen auf.

Erfindungsgemäß wird somit vorgeschlagen, in einer ersten Verfahrensstufe (Verfahrensschritt a) zuerst ein Prepolymer herzustellen, das ein Reaktionsprodukt aus einem organischen Diisocyanat und einem polymeren Diol enthält und dann erst in einer zweiten nachgelagerten Verfahrensstufe (Verfahrensschritt b) nach Abkühlen dieses Prepolymers um 10 bis 50 K das Gel- und/oder Schmelzhilfsmittel zuzusetzen. Dieses so hergestellte Prepolymer wird dann unter Erhaltung seines schmelzflüssigen Zustandes (Verfahrensschritt c) unter Rühren mit einem Kettenverlängerer versetzt. Wesentlich ist nun, daß dieses Prepolymer, wie vorstehend beschrieben hergestellt, im schmelzflüssigen Zustand einem Extruder zugeführt wird und dann anschließend die dadurch erhaltene Polymerschmelze über Spinndüsen zu Polyurethan- und/oder Polyurethanharnstoffäden versponnen wird. Erfindungswesentlich ist dabei die genaue Abfolge der Verfahrensschritte a bis e. Es hat sich nämlich gezeigt, daß nur unter Einhaltung des vorstehend beschriebenen Verfahrensablaufes Polyurethan- und/oder Polyurethanharnstoffäden mit brauchbaren physikalischen Eigenschaften erhalten werden.

Bei der Herstellung des Prepolymers (beim Verfahrensschritt a) wird so vorgegangen, daß bevorzugt die Ausgangskomponenten, d.h. das Diol und das organische Diisocyanat, im flüssigen Zustand getrennt vorgelegt und dann in einem geeigneten Reaktionsgefäß, z.B. einem Rührreaktor, umgesetzt werden. Die Reaktionstemperatur richtet sich nach den ausgewählten Ausgangskomponenten und liegt im Bereich von 50 bis 150 °C. Die Reaktion wird so lange durchgeführt, bis eine vollständige bzw. nahezu vollständige Umsetzung des Diols mit dem Diisocyanat erreicht ist. Bevorzugt ist es, wenn ein Verhältnis Diol zu Diisocyanat (in Mol zu Mol) von 1 : 1,1 bis 1 : 10,0 eingehalten wird. Besonders bevorzugt ist das Molverhältnis 1 : 1,4 bis 1 : 4. Die Ausgangsverbindungen können hierbei in reiner Form oder als Gemisch eingesetzt werden. Aus stofflicher Sicht schließt die Erfindung alle bisher bereits für die Herstellung von Polyurethan und/oder Polyurethanharnstoff bekannten Diisocyanate bzw. polymeren Diole mit ein. Die Erfindung umfaßt hierbei insbesondere die in der EP 0 553 944 erwähnten Verbindungen. Bevorzugt ist es, wenn als organisches Diisocyanat unverkapptes und/oder verkapptes Diisocyanat eingesetzt wird. Besonders bevorzugt ist die Verwendung von Hexamethylendiisocyanat. Bei den Diolen sind die Hydroxypolyether und/oder die Hydroxypolyester bevorzugt. Ganz besonders geeignet für das erfindungsgemäße Verfahren ist die Verwendung von Polytetrahydrofuran. Die polymeren Diole weisen bevorzugt eine Molmasse von 1000 bis 3000 g/Mol auf und ein Molmassenverhältnis von M_{w}/Mₙ < 2,0. Gerade die Einhaltung dieser Bedingungen hat sich als besonders günstig für die Eigenschaften der Fäden erwiesen. Eine Beeinflussung der Produkteigenschaften ist durch den unterschiedlichen Einbau der Hartsegmente in statistische oder nichtstatistische Verteilung möglich.

Entscheidend beim erfindungsgemäßen Verfahren ist, daß das, wie vorstehend beschrieben, hergestellte Prepolymer im schmelzflüssigen Zustand gehalten wird und dann das Temperaturniveau dieser schmelzflüssigen Phase um 5 bis 50 °C, bevorzugt um 10 bis 30 °C, abgesenkt wird. Erst zu diesem Zeitpunkt wird dann ein Gel- und/oder Schmelzhilfsmittel im flüssigen Zustand zugegeben. Bei diesem Verfahrensschritt ist zu beachten, daß hier das flüssig zugegebene Gel- und/oder Schmelzhilfsmittel gleichmäßig im Prepolymer verteilt werden muß, was am besten durch intensives Rühren im Rührreaktor bewerkstelligt werden kann. Bevorzugt wird 1 bis 25 Masse-%, bezogen auf das Prepolymer, vom Gel- und/oder Schmelzhilfsmittel zugesetzt.

Besonders bevorzugt sind 2 bis 10 Masse-%. Aus stofflicher Sicht wird besonders bevorzugt so vorgegangen, daß als Gel- und/oder Schmelzhilfsmittel ein Carbonsäureamid und hier insbesondere ε-Caprolactam eingesetzt wird.

Nach Zugabe des Gel- und/oder Schmelzhilfsmittels wird ein Kettenverlängerer, ebenfalls unter intensivem Rühren, zugesetzt. Das intensive Rühren hat in diesem Verfahrensstadium auch die Aufgabe, eine nahezu vollständige und homogene Verteilung des Kettenverlängerers im wie vorstehend beschrieben hergestellten Prepolymer zu erreichen. Alternativ ist es jedoch auch möglich, daß der Kettenverlängerer nicht nach der Zugabe des Gel- und/oder Schmelzhilfsmittels eingesetzt wird, sondern gleichzeitig mit dem Gel- und/oder Schmelzhilfsmittel. Der Kettenverlängerer kann auch alternativ in den Extruder eingespeist werden. Als Kettenverlängerer kommen dabei alle aus dem Stand der Technik bisher bekannten Kettenverlängerer bei der Herstellung von Polyurethan- und/oder Polyurethanharnstoffschmelzen in Frage. Beispiele hierfür sind aliphatische Dihydroxyverbindungen, aliphatische und/oder arylaliphatische Hydroxyaminverbindungen, aliphatische und/oder aromatische Diaminverbindungen oder deren Mischungen. Beim erfindungsgemäßen Verfahren ist es auch möglich, daß trifunktionelle Kettenverlängerer zur Modifizierung eingesetzt werden. Dies dient z.B. zur Verbesserung der Anfärbbarkeit.

Die Menge des Kettenverlängerers wird durch das vorgebene Molverhältnis von Diol zu Diisocyanat (1 : 1,1 bis 1 : 10) bestimmt.

Durch das vorstehend beschriebene Verfahren und die nachfolgende Herstellung der Fasern werden Hartsegmentanteile von 10 bis 30, bevorzugt 15 bis 25 Masse-% erreicht.

Um gezielt spezielle Eigenschaften zu erreichen, ist es auch möglich, dem Prepolymer beim Verfahrensschritt a, b und/oder c Additive zuzugeben. Das Additiv kann auch wie der Kettenverlängerer direkt dem Extruder zugeführt werden. Beispiele für derartige Additive sind Stabilisatoren (z.B. Hitzestabilisatoren) Weichmacher, Gleitmittel, Spinnhilfsmittel, Flammschutzmittel, Pigmente, Farbstoffe, Farbhilfsstoffe oder Emulgatoren. Als Stabilisatoren gegen thermischen Abbau und oxidativen Abbau eignen sich sterisch gehinderte Phenol- und Phosphor-Verbindungen, wie z.B. Ester der Phosphorsäure (z.B. Triphenylphosphat), der phosphorigen Säure (z.B. Triphenylphosphit), der Phosphonsäure (z.B. Diethylethoxycarbonylmethylphosphonat), der phosphonigen Säure (z.B. Benzolphosphonigsäure-Natriumsalz) sowie Salze der Phosphorsäure (z.B. Natriumpolyphosphat). Beispiele für ein sterisch gehindertes Phenol ist das Phenol mit der CAS-Nummer 6683, Beispiele für UV- und Lichtstabilisatoren sind Verbindungen der Benztriazole.

Bei dieser wie vorstehend geschilderten Herstellung des Prepolymers gemäß den Verfahrensschritten a bis c ist es wichtig, daß mit reinen Ausgangsprodukten, d.h. mit reinem Diisocyanat, polymerem Diol, Gelund/oder Schmelzhilfsmitteln, Kettenverlängerern und gegebenenfalls Additiven gearbeitet wird. Der Transport, die Lagerung und die Verarbeitung erfolgen deshalb vorzugsweise unter Inertgas und unter Ausschluß von Sauerstoff, sauren Gasen und Feuchtigkeit. Dies kann z.B. durch eine Spülung des Reaktionsgefäßes mit Inertgas erfolgen, bis es sauerstoff- und wasserfrei ist. Zur Entwässerung der Diolkomponente ist es bevorzugt, daß diese unter Vakuum (mehrere Stunden unter Vakuum mit 1 bis 60 mbar und erhöhter Temperatur), eventuell unter Verwendung von Trocknungsmitteln, durchgeführt wird. Für größere Durchsatzmengen und zur gleichzeitigen Entfernung von Gaseinschlüssen kann auch ein Dünnschichtapparat eingesetzt werden. Der maximal zugelassene Feuchtegehalt sollte 30 ppm nicht überschreiten.

Die Viskosität des wie vorstehend beschriebenen Prepolymers bewegt sich im Bereich von 1 bis 200 Pa·s bei 80° C, und die Molmasse des Prepolymers nimmt Werte von 1.000 bis 5.000 g/Mol an. Beim erfindungsgemäßen Verfahren ist es besonders vorteilhaft, daß die Herstellung der Polyurethan- und/oder Polyurethanharnstoffäden über ein derartiges Prepolymer erfolgt, weil dieses Prepolymer bereits ein homogenes Reaktionssystem darstellt, so daß eine Polymerisation nun nur noch durch Temperaturerhöhungen gezielt erfolgen kann.

Erfindungsgemäß wird die Fortführung der Polyadditionsreaktion in einem Extruder vorgenommen. Dadurch besteht die Möglichkeit, daß durch die Dimensionierung und die Betreibung des Extruders die Polyadditionsbedingungen gezielt eingestellt und somit auch beeinflußt werden können. Bevorzugt wird ein Doppelschneckenextruder eingesetzt, in dem die Schnecken dicht kämmend sind und einen hohen Selbstreinigungseffekt aufweisen sowie gleichzeitig gut mischend und scherend sind. Die Schnecken werden bevorzugt so konfiguriert, daß ein möglichst enges Verweilzeitspektrum zur Erzielung einer einheitlichen Produktqualität erreicht wird. Die Schnecken weisen ein hohes L/D-Verhältnis auf (20 bis 60, bevorzugt 25 bis 60). Der Extruder wird mit einem Temperaturprofil mit hoher zeitlicher Temperaturkonstanz betrieben.

Die nach dem Verfahrensschritt d erhaltene Polymerschmelze wird über Spinndüsen zu Polyurethan- und/oder Polurethanharnstoffäden versponnen. Alternativ zum vorstehend beschriebenen Verfahrensablauf ist es jedoch auch möglich, entweder das Prepolymer, hergestellt nach Verfahrensschritt c, oder die Polymerschmelze, die nach Verfahrensschritt d erhalten wird, abzukühlen und zu lagern und erst bei Bedarf wieder aufzuschmelzen und den entsprechenden weiteren Verfahrensschritten zuzuführen. Bei dem Prepolymer nach Verfahrensschritt c ist es auch möglich, dieses in flüssigem Zustand zu lagern. Es hat sich hierbei gezeigt, daß insbesondere die Prepolymerschmelze, die nach Verfahrensschritt c erhalten worden ist, sogar ohne die Lagerstabilität erhöhende Stabilisatoren unter Luftausschluß mindestens eine Woche lagerfähig ist. Genauso verhält es sich mit der abgekühlten Polymerschmelze, die nach Verfahrensschritt d erhalten worden ist. Auch diese ist unter Luftausschluß mindestens eine Woche haltbar.

Wie vorstehend bereits beschrieben, wird die Schmelze über Spinndüsen zu den entsprechenden Fäden versponnen. Je nach dem reaktionstypischen und zeitlichen Verlauf der Polyaddition des eingesetzten chemischen Systems gelangt somit eine durch einen bestimmten Schmelzeviskositätswert sich auszeichnende Polymerschmelze in den Spinnkopf. Dieser Viskositätswert kann zwischen 150 und 10.000 Pa·s, gemessen bei der Temperatur der Schmelzeleitung, liegen.

Mit der Spinnkopftemperatur kann die Schmelzeviskosität in bestimmten Bereichen beeinflußt werden, indem höhere Temperaturen die Viskosität absenken. Wichtig ist, daß die Viskosität unmittelbar vor der Spinndüse 3.000 Pa·s nicht überschreitet. Die Temperaturen des Spinnkopfes werden dabei bevorzugt in einem Bereich von 210 bis 240°C gehalten. Zu hohe Temperaturen bergen die Gefahr des Beginns eines Polymerabbaus in sich.

Als weitere Maßnahme zur Verbesserung der Spinnverhältnisse ist die Gestaltung des Spinnpaketes zu nennen. Das Spinnpaket besteht bevorzugt aus einem oder mehreren Filterelementen, die aus Filtergewebe, Metallfaservlieseinlagen, Sintermetallplatten oder Sandschüttungen bestehen können, aus Dichtelementen und Stützelementen sowie der Spinndüsenplatte.

Besonders bei den höherviskosen Schmelzen mit einem hohen Speichermodul, wie es auf Polyurethan- und/oder Polyurethanharnstoffschmelzen in der Regel zutrifft, kommt es darauf an, Turbulenzen in den Bohrungskanälen der Spinndüsenplatte zu vermeiden. Günstig sind kontinuierlich sich verjüngende, an der Oberseite der Spinndüsenplatte beginnende Einlaufkanäle, die zu Spinnbohrungen bevorzugt von 0,3 bis 0,9 mm Durchmesser und dem 0,5- bis 3-fachen dieses Wertes als Länge führen. Die Anzahl der Bohrungen je Spinndüsenplatte, deren austretende Filamente den aufzuwickelnden Faden bilden, kann zwischen einer und einer Vielzahl variieren.

Nach dem Austritt der Schmelzestrahlen aus der Spinndüse in den freien Raum müssen diese abkühlen, um zu verfestigen. Die Abkühlung wird hier bevorzugt in einem Kühlschacht vorgenommen, wobei dieser quer oder parallel zur Laufrichtung belüftet werden kann. Die entstehende Abluft wird dabei abgesaugt und weggeführt.

Eine weitere bevorzugte Ausführungsform schlägt vor, daß die Filamente nach Verlassen der Spinndüsen, aber vor dem Kühlschacht, noch durch eine Nachheizzone geführt werden. Stattdessen kann auch eine Zone verwendet werden, in der eine Warmluftbeschleierung erfolgt, z.B. mit Luft oder Inertgas. Für die Nachheizstrecke sind je nach Polymerzusammensetzung und Prozeßführung Längen von 100 bis 300 mm und Heiztemperaturen von 50 bis 200 °C einzukalkulieren. Diese Maßnahme hat sich aufgrund einer besseren Strukturausbildung der Filamente bewährt. Es ist jedoch auch möglich, gute Spinn- und Fadeneigenschaften bei völligem Verzicht auf eine Nachheizung zu finden.

Die weiteren im Kühlschacht realisierten Abkühlbedingungen der Filamente werden von der Geschwindigkeit der im Querstrom zur Längsachse des Kühlschachtes bewegten Luft und ihrer Temperatur bestimmt. Als Grenzwerte können gelten 0,2 bis 1,0 m/s und 10 bis 80°C. Bei der Parallelanströmung sind Werte von 0,3 bis 3 m/s geeignet, bei Temperaturen zwischen 10 und 80°C.

Bevor die Filamente endgültig verfestigt sind und sie einen Präparationsüberzug erhalten, sollten sie sich untereinander berühren und miteinander verkleben, um einen geschlossenen Verband zu bilden, aus dem keine einzelnen Filamente hervortreten, die die weitere Verarbeitung des Fadens stören könnten. Für das Berühren kann die Bündelung der Filamente in einem Punkt der Präpariereinrichtung Anlaß geben. Es können aber auch zusätzliche Hilfsmittel wie beispielsweise Falschdralleinrichtungen in die Laufstrecke der Filamente eingeschaltet werden.

Für das Präparieren sind spezielle ölige Präparationen im Gebrauch, die, über Pumpen gefördert und genau dosiert, mittels gabelförmiger Führungselemente auf den vorbeigeführten Faden übertragen werden. Ebenfalls bekannt sind in die Präparationsflüssigkeit eintauchende umlaufende Scheiben, von denen die Filamente oder der Faden einen Teil des Flüssigkeitsfilms abstreift und annimmt. Neben den spezifischen Eigenschaften einer Präparation entscheidet ihre auf dem Faden verbleibende Menge über die Verarbeitbarkeit des Fadens. Diese Menge wird mittels bekannter Extraktionsmethoden bestimmt. Der auf den Faden bezogene prozentuale Anteil soll höher als 3 % liegen. Das Abziehen der Fäden aus der Spinnzone erfolgt dann bevorzugt mit Galetten. Die Abzugsgeschwindigkeit, mit der dies durchgeführt werden kann, variiert in weiten Grenzen und ist abhängig von dem Polymer und den gewünschten Fadeneigenschaften, insbesondere der Feinheit des Fadens. Die Geschwindigkeit kann im Bereich von 50 bis 1.000 m/min liegen. Je nach gewünschtem Eigenschaftsprofil kann der Faden in dieser zeitlichen Phase seiner Entstehung auch durch Wärmeeinwirkung durch die beheizten Galetten oder durch mit anderen Mitteln (Heizschienen, Heizdüsen) erzielte Erwärmung der Fäden in Verbindung mit unbeheizten Galetten noch teilweise plastisch verstreckt werden. Die Höhe der Verstreckung bestimmt dabei die Feinheit des Fadens und hat Einfluß auf seine Festigkeit, Dehnung und den elastischen Dehnanteil.

Je nach den gewählten Polymerzusammensetzungen und verfahrenstechnischen Bedingungen entstehen die erfindungsgemäßen Fäden von bestimmter Feinheit, Festigkeit, Dehnung und Elastizität. Mit einer nachträglichen Wärmebehandlung des Fadens, beispielsweise auf der Spule, mit einer Temperatur von 60 bis 130°C und einer Wärmebehandlungsdauer von 1 bis 48 Stunden, lassen sich die Eigenschaftswerte für Festigkeit, Dehnung und elastischen Dehnanteil nochmals erhöhen. Die Wärmebehandlung wird bevorzugt unter Luft- und Feuchtigkeitsausschluß vorgenommen.

Anstelle der Bündelung der einzelnen Filamente zu einem Faden und dessen Aufwicklung auf eine Spule können die Filamente auch mit bekannten Mitteln in Form eines Spinnvlieses abgelegt werden.

Außer zur Fadenherstellung kann das vorliegende Verfahren auch zur Herstellung von Drähten und Profilen und sonstigen Kunststoff-Halbzeugen auf der Basis von Polyurethan- oder Polyurethanharnstoff verwendet werden. Dazu wird nachfolgend an den Extruder ein Extrusionswerkzeug mit bekannten Abzugs- und Aufwickeloder Ablängungseinrichtungen angeordnet.

Weitere Merkmale, Einzelheiten und Vorzüge der Erfindung ergeben sich aus der nachfolgenden Beschreibung von zwei bevorzugten Ausführungsformen zur Herstellung der Fäden sowie anhand von Beispielen. Es zeigen:
- Fig. 1: den schematischen Aufbau des Vorrichtungsteiles zur Herstellung der Polymerschmelze,
- Fig. 2: den schematischen Aufbau der spinntechnischen Vorrichtung mit einem Kühlschacht, der quer zur Fadenlaufrichtung belüftet wird,
- Fig. 3: den schematischen Aufbau der spinntechnischen Vorrichtung, wobei ein Kühlschacht mit einer Belüftung parallel zur Laufrichtung vorgesehen ist.

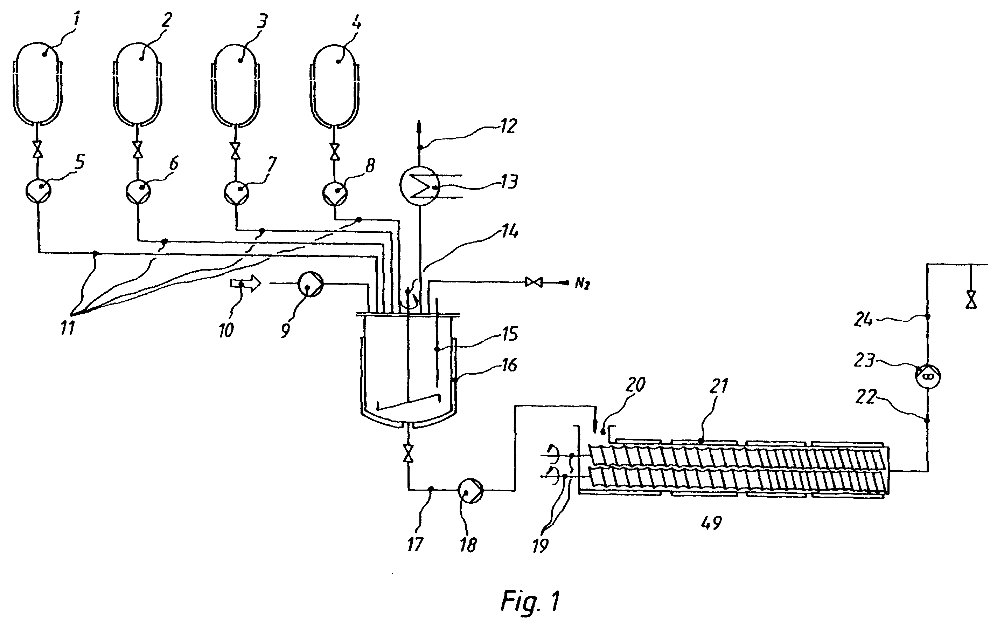

Figur 1 zeigt eine beispielhafte Ausführungsform zur Herstellung des Prepolymers, d.h. die Vorrichtung, die die Verfahrensschritte a bis d beinhaltet.

Die Temperierung der flüssigen bzw. geschmolzenen Ausgangskomponenten (Diol, Diisocyanat, Schmelzhilfsmittel und Kettenverlängerer) erfolgt nach der beispielhaften Ausführungsform nach Fig. 1 in Doppelmantelbehältern 1 bis 4, die auch mit einer Rührvorrichtung und/oder Umpumpvorrichtungen (nicht abgebildet) bestückt sein können. Die Temperierung kann auch über außenliegende Wärmetauscher erfolgen. Der Transport, die Lagerung und die Verarbeitung der Reaktionsteilnehmer erfolgt vorzugsweise unter Inertgas und unter Ausschluß von Sauerstoff und sauren Gasen, wie z.B. Kohlendioxid und Feuchtigkeit. Mit Hilfe der Dosieraggregate 5 bis 8 erfolgt eine chargenweise Zudosierung der Ausgangskomponenten über temperierbare Rohrleitungen 11 in einen Rührreaktor 16. zur Dosierung von Additiven ist ergänzend eine Zuführung 10 vorgesehen, die mittels der Dosierpumpe 9 gesteuert werden kann. Die Bestimmung der notwendigen Mengen kann z.B. sowohl volumetrisch als auch gravimetrisch erfolgen. Der Rührreaktor 16 ist mit einem Temperiersystem ausgestattet. Die Temperierung erfolgt vorzugsweise über dampfförmige oder flüssige Wärmeträger. Die Heiz- bzw. Kühlleistung wird nach der im Produktraum mit einem Sensor 15 gemessenen Temperatur geregelt und auf Solltemperatur gehalten. Die Prepolymerherstellung erfolgt im Rührreaktor 16 vorzugsweise unter Umgebungsdruck. Je nach Dampfdruck der eingesetzten Ausgangskomponenten kann ein Betrieb auch unter erhöhtem Druck erforderlich sein. Der Rührreaktor 16 ist mit einem in der Drehzahl veränderbaren Rührwerksantrieb 14 ausgerüstet. In einem mit Kühlmedium beaufschlagten Kondensator 13 können die mit der Inertgasspülung ausgetragenen Produkte auskondensiert und zurückgeführt werden. Über die Rohrleitung 12 erfolgt gegebenenfalls eine Evakuierung des Rührreaktors für Trockenzwecke bzw. es kann eine Entgasung vorgenommen werden. Die Fortführung der Polyadditionsreaktion findet in einem Doppelschneckenextruder 49 statt. In der Ausführungsform nach Fig. 1 ist ein gleichsinnig laufender Doppelschneckenextruder vorgesehen. Die Schnecken 19 sind dichtkämmend mit einem hohen Selbstreinigungseffekt, gut mischend und scherend. Die Schnecken 19 sind so konfiguriert, daß ein möglichst enges Verweilzeitspektrum zur Erzielung einer einheitlichen Produktqualität erreicht wird. Die Schnecken 19 weisen ein hohes L/D-Verhältnis auf (20 bis 60, bevorzugt 25 bis 60). Der Extruder 49 wird mit einem Temperaturprofil mit hoher zeitlicher Konstanz betrieben. Die Beheizung des Extruders 49 erfolgt hier über einzelne elektrische Heizmanschetten 21. Außer den Gehäusetemperaturen, die über die Heizmanschetten 21 geregelt werden, ist die Verfolgung der Produkttemperaturen, der Temperatur im Einzugsschacht 20, die Messung der Drehmomente und der Druck im Extruder und am Austritt aus dem Extruder 22 für Steuer- und Regelungsprozesse notwendig. Es hat sich in Versuchen gezeigt, daß bei der Ausführungsform nach Figur 1 Temperaturen von 250° C nicht überschritten werden sollten.

Das Prepolymer aus dem Rührreaktor 16 wird über eine beheizte Leitung 17 und die Fördereinrichtung 18, vorzugsweise eine Zahnradpumpe, dem Extrudereinzugsschacht 20 so dosiert, daß eine vollständige Füllung aller Schneckengänge bei laufender Maschine gewährleistet wird. Es ist hierbei auch möglich, daß mit mehreren Extrudern 49 gearbeitet wird. In diesem Fall kann dann die beheizte Leitung 17 entsprechend der Anzahl der Extruder 49 aufgeteilt werden, oder es können separate Leitungen eingesetzt werden. Die Temperatur im Einzugsschacht 20 liegt unterhalb der Reaktionstemperatur der Kettenaufbaureaktion. Über das Temperaturregime des Extruders 49 wird die Polymerisationsgeschwindigkeit der Polymeraufbaureaktion zur thermoplastisch verarbeitbaren Schmelze gesteuert. Die sich im Extruder 49 aufbauende Druckdifferenz (Eintritt/Austritt) sollte Werte ≤ 100 bar annehmen, da Rückströmungseffekte und eine zu hohe Scherung, die die Produktqualität mindern können, zu vermeiden sind. Ein Mindestdruck muß zur stabilen Förderung am Saugflansch 22 der beheizten Druckpumpe 23 vorliegen. Der Extruder 49 wird im Einzugschacht 20 vorzugsweise drucklos betrieben. Alternativ kann eine Einspeisung des Prepolymers oder einzelner Komponenten auch unter Druck erfolgen. Zum Beispiel können der Kettenverlängerer und Additive auch erst im Extruder 49 in entsprechende Mischzonen eingespeist werden. Die Schmelzeleitung 24 ist exakt zu temperieren. Der Druckabfall in der Schmelzeleitung liefert während des Betriebes bei sonst konstanten Bedingungen der Temperatur und des Durchsatzes Aussagen für die Steuerung der Polymeraufbaureaktion.

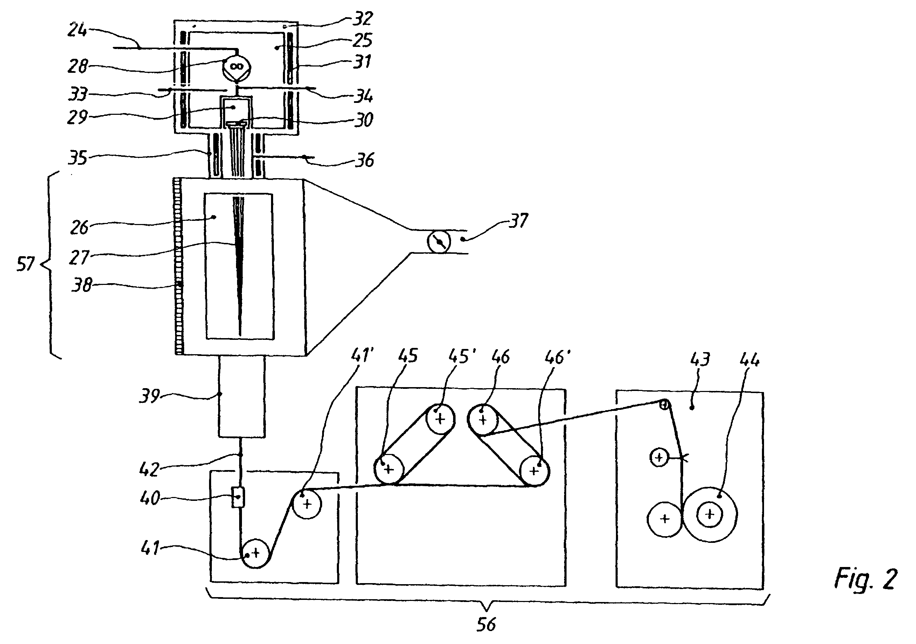

Figur 2 zeigt nun im schematischen Aufbau den spinntechnischen Teil der Vorrichtung. Über die beheizbare Schmelzeleitung 24 gelangt die Polymerschmelze zum Spinnkopf 25. Der Spinnkopf 25 hat die Aufgabe, die Polymerschmelze in einzelne Schmelzestrahlen umzuformen, die im nachgeordneten Kühlschacht 57 zu Filamenten 27 erstarren. Der Kühlschacht 57 besteht in der Ausführungsform nach Fig. 2 im wesentlichen aus einer zylindrischen Vorrichtung 26. Zum Transport der Schmelze in der Schmelzeleitung 24 existiert eine als Spinnpumpe bezeichnete motorgetriebene Zahnradpumpe 28, die mit hoher Mengengenauigkeit und zeitlicher Konstanz die Schmelze durch ein in den Spinnkopf 25 integriertes auswechselbares Spinnpaket 29 drückt. Das Spinnpaket 29 besteht aus Filterelementen zur Reinigung der geförderten Schmelze, aus Dicht- und Stützelementen und der Spinndüsenplatte 30.

Für die Reinigung der Schmelze kommen im allgemeinen Metalldraht- und Metallfaservlies-Filtersiebeinlagen, aber auch beispielsweise Feinsandpackungen oder Sintermetallplatten in Betracht. Letztere besitzen eine Doppelfunktion. Außer der Filterwirkung entsteht infolge des hohen Energieeintrages, der für das Durchströmen dieser Platten mit dem viskosen Medium Schmelze notwendig ist, eine Erwärmung der Schmelze, und zwar unmittelbar vor ihrem Eintritt in die Düsenbohrung. Die Temperaturerhöhung in der Schmelze entsteht durch Dissipation (Reibung beim Durchströmen der sintermetallplatte). Mit der Erwärmung der Schmelze geht gewöhnlich eine Viskositätsabsenkung derselben einher, die das anschließende Spinnen des Fadens begünstigen kann.

Der Spinnkopf 25 als Ganzes ist mit einem flüssigkeits- oder dampfbeheizbaren Doppelmantel oder mit einer elektrischen Heizmanschette 31 umgeben und thermisch isoliert 32. In seinem Inneren ermittelt ein Meßfühler 33 die aktuelle Temperatur und veranlaßt ihre Regelung nach Sollwert-Vorgabe. Weiterhin existiert im Schmelzestrom nach der Spinnpumpe 28 ein Druckmeßfühler 34, der den sogenannten Spinndruck überwacht und Verfahrensunregelmäßigkeiten sowie die Filterbelegungsrate erkennen läßt.

Nach dem Austritt der Schmelzestrahlen aus der Spinndüse 30 in den freien Raum müssen diese abkühlen, um zu verfestigen. Es kann für die in den einzelnen Filamenten einsetzende Strukturausbildung erwünscht oder notwendig sein, die Abkühlung im ersten auf die Spinndüse 30 folgenden Streckenabschnitt zu verlangsamen. Dazu dient das in Länge und Temperatur variierbare beheizte Rohr 35, dessen Querschnitt ausreichend groß zu dimensionieren ist, damit es nicht zu einer Wandberührung durch die Filamente kommt. Die Wandtemperatur oder wandnahe Temperatur des sogenannten Nachheizers wird durch einen weiteren Meßfühler 36 ermittelt und ebenfalls geregelt.

Für das weitere Abkühlen durchlaufen die Filamente den Kühlschacht 57, der im Beispiel quer zur Fadenlaufrichtung belüftet wird. Die Kühlluft wird im Anschluß 37 abgesaugt, wodurch Kühlluft an die Filamente 27 herangeführt wird und zugleich Dämpfe, die die Filamente 27 abgeben und die gesundheitsgefährdend sein können, gezielt abgeführt werden.

Das Absaugen der Luft auf der einen Seite des Kühlschachtes 57 bewirkt ein Zuströmen auf der anderen Seite. Um Luftturbulenzen zu vermeiden, muß die Luft zuvor ein Strömungsgitter 38 passieren und ein Luftzutritt von anderer Seite, beispielsweise durch das Fallrohr 39, unterbunden werden. Auch kann durch das Strömungsgitter 38 die gleiche Menge Luft eingeblasen werden, wie gegenüber abgeführt wird.

Nach Passieren des Fallrohres 39 werden die Filamente 27 in die Spinnmaschine 56 geführt. Gemäß der vorliegenden Erfindung werden alle dem Kühlschacht 57 nachgeordneten Vorrichtungen als Spinnmaschine 56 bezeichnet. In einem ersten Schritt kommen die Filamente 27 in Kontakt mit einer Präpariereinrichtung 40, die das Filamentbündel, das nunmehr einen geschlossenen Faden 42 bildet, mit einem die Weiterverarbeitung sichernden öligen Film umhüllt, bevor der Faden von der ersten Galette 41 erfaßt und fortlaufend als ein aus einer Schmelze ersponnener verfestigter Faden 42 abgezogen wird.

Auch können die Filamente durch eine vor oder nach der Präpariereinrichtung 40 angeordneten Falschdralleinrichtung (nicht abgebildet) Drehung erhalten, die zu einer Bündelung der Filamente bereits im Spinnschacht oder Fallrohr führt.

Je nach Abkühlungsverlauf kann die Präpariereinrichtung 40 mehr oder weniger weit entfernt von der Spinndüse 30 angeordnet sein.

Für einen schlupffreien Abzug des Fadens 42 ist es die Regel, daß dieser nach einer etwa halben Umschlingung der ersten Galette 41 eine zweite Galette 41' in ebensolcher Weise umschlingt, oder der Faden 42 wird mehrfach um beide Galetten 41, 41' geführt.

Für den weiteren Lauf des Fadens 42 existieren mehrere Varianten. So kann dieser direkt einem Wickler 43 zugeführt und zur Spule 44 aufgewickelt werden. Ebenso ist es möglich, den Faden 42 beispielsweise zwischen den Abzugsgaletten 41, 41' und einem weiteren Galettenduo 45, 45' oder zwischen diesem und einem dritten Galettenduo 46, 46' zu verstrecken. Auch eine Wärmebehandlung vor der Aufwicklung ist möglich. Es kann auch die fertig bewickelte Spule 44 in einer geeigneten Einrichtung, beispielsweise einem Kammerofen, zur vollen Ausbildung ihrer Fadenstruktur und -eigenschaften nachbehandelt werden. Bei der Aufwicklung des Fadens ist zu beachten, daß dieser in Abhängigkeit von der sich einstellenden Spinn- und Streckspannung das Bestreben hat, sich durch Verkürzen zu entspannen. Wird der Faden mit einer zu hohen Spannung auf die Spule 23 aufgewickelt, können Wickelhülse, Spule und Fäden besonders an deren Verkreuzungspunkten bei der Herstellung eines Kreuzwickels deformiert werden. Es kommt deshalb darauf an, den Nachlauf der Wicklergeschwindigkeit gegenüber der Geschwindigkeit des letzten Galettenduos so weit zu vergrößern, bis weiche und gut rückwindbare Spulenbewicklungen entstehen. Als Richtwert kann hierfür eine Fadenspannung von 0,02 bis 0,10 cN/dtex angegeben werden.

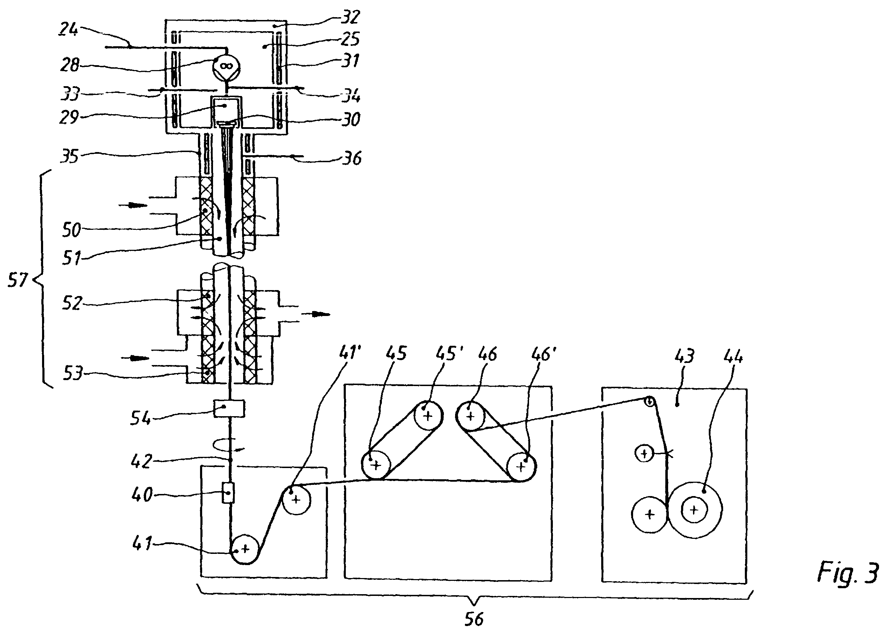

In einer weiteren Ausführungsvariante, die in Fig. 3 dargestellt ist, wird das Filamentbündel nicht quer, sondern mit einem Kühlschacht 57 parallel zur Laufrichtung mit Luft oder einem Inertgas angeströmt. Der Aufbau des Spinnkopfes 25 sowie der Spinnmaschine 56 entspricht dabei dem nach Fig. 2. Der Kühlschacht 57 ist dabei wie folgt aufgebaut:

Hinter der Nachheizzone 35 läuft der Faden dabei durch ein poröses Rohr 50, z.B. aus Sintermetall. Durch dieses Rohr 50 wird von außen über einen Doppelmantel temperierte Luft oder Inertgas eingeblasen. Dieser Gasstrom hat die Aufgabe, im folgenden Fallrohr 51 ein definiertes axiales Temperaturprofil im Faden 42 einzustellen, das die Ausbildung von geordneten Strukturen im Polymer sowie eine weitere Erhöhung des Umsatzes der chemischen Kettenwachstumsreaktionen begünstigt. Beide Vorgänge verbessern die Fadeneigenschaften. Das Fallrohr 51 ist von außen beheizbar (elektrisch, mit Dampf oder einem flüssigen Wärmeträger). Seine Länge hängt stark von der chemischen Zusammensetzung des Polymers und von der Fadengeschwindigkeit ab. Systeme mit langsamer Nachreaktion und Strukturausbildung benötigen große Längen.

Am unteren Ende des Fallrohres 51 ist ein zweites poröses Rohr 52 mit Doppelmantel angebracht, durch das der Gasstrom nach außen abgesaugt wird. Darunter kann eine weitere derartige Vorrichtung 53 angeordnet sein, durch die ein Gasstrom eingeleitet wird, der den Faden 42 kühlt und das Entweichen von (gesundheits-)schädlichen Gasen verhindert. Dieser Gasstrom steigt nach oben und wird in 52 abgesaugt.

Beim Austritt des Fadens 42 aus 53 müssen die chemischen und physikalischen Vorgänge im Faden 42 so weit abgeschlossen sein, daß die nun folgende Behandlung nicht durch Klebrigkeit beeinträchtigt oder verhindert wird.

In einer bevorzugten Ausführungsform wird an dieser Stelle mechanisch durch eine entsprechende Vorrichtung 54 ein Falschdrall auf den Faden 42 gebracht, der zum Verschweißen der einzelnen Filamente im Fallrohr führt. Diesselbe Wirkung erreicht man, wenn der Faden 42 durch eine Dralldüse geführt wird. Die weitere Verfahrensführung entspricht der nach Fig. 2.

Die Erfindung wird nachfolgend durch drei Beispiele näher beschrieben. Das Verfahren wurde mit einer Vorrichtung gemäß Figur 1 in Verbindung mit Fig. 2 durchgeführt.

### Beispiel 1

| **Chemischer Ansatz** | **g/Mol** | **Zusammensetzung** |
|---|---|---|
| Polytetrahydrofuran (P-THF) | 2.000 | 1,000 n Mol |
| Hexamethylendiisocyanat (HMDI) | 168 | 1,896 n Mol |
| Ethanolamin-1,2 (EA-1,2) | 61 | 0,896 n Mol |
| ε-Caprolactam (Schmelzhilfsmittel) | 113 | Gehalt von 4,0 Masse-% |

Entsprechend der aufgeführten Rezeptur erfolgte die Prepolymerherstellung wie folgt:

Das P-THF wurde in einer Heizkammer 1 aufgeschmolzen und bei einer Temperatur von 50 °C und mit einem Vakuum von ca. 1 mbar und unter Anwesenheit von Trockenmittel etwa 48 Stunden getrocknet. Die erforderliche Menge (gravimetrisch bestimmt) wurde dem Rührreaktor 16 zugeführt. Zugleich wurde darauf geachtet, daß die übrigen Komponenten in genügend reiner und trockener Form vorlagen.

Danach erfolgte ein kurzes Evakuieren des Rührreaktors mit anschließender Stickstoffbeaufschlagung. Nachdem der Rührreaktorinhalt auf 80 °C temperiert worden war, erfolgte die Zugabe des Diisocyanates, wobei eine starke Vermischung mittels eines Ankerrührers realisiert wurde. Anschließend wurde der Rührreaktor auf eine Temperatur von 120 °C gebracht und auf diesem Niveau 2,5 Stunden belassen.

Danach erfolgte eine Absenkung der Temperatur auf 100 °C. Mit Erreichen dieser Temperatur wurde als Schmelzhilfsmittel ∈-Caprolactam zugegeben und 1 Stunde bei dieser Temperatur homogenisiert. Nach Abkühlung des Rührreaktorinhaltes auf 80°C wurde der Kettenverlängerer zugegeben. Es schloß sich eine Mischzeit von etwa 0,5 Stunden an. Danach wurde das Prepolymer dem Doppelschneckenextruder zudosiert.

Der hier eingesetzte Doppelschneckenextruder wies folgende Merkmale auf:

| | |
|---|---|
| Schneckendurchmesser | 28 mm |
| Schneckenlänge | 780 mm |
| Anzahl der Heiz-Kühlzonen | 7 |
| Schnecken | gleichsinnig drehend, Gewindeprofile, Steigung kontinuierlich abnehmend |

Die Dosierung des Prepolymers erfolgte so, daß die Schnecken im Einzugsschacht 20 gefüllt waren, wobei im Einzugsschacht 20 Normaldruck herrschte. Das Temperaturprofil war stetig steigend. Die Heizzonentemperatur bewegte sich zwischen 150 und 180 °C. Der Extruder lief mit einer Drehzahl von 30 U/min. Der Druck am Extruderkopf betrug 21 bar mit einem Durchsatz von 500 g/h. Die Druckpumpe 23 förderte die Schmelze in einer mit Wärmeträger von 185 °C beheizten Leitung 24 von ca. 2300 mm Länge und einem Durchmesser von 7 mm zur Spinnpumpe 28 und zum Spinnkopf 25.

Der Spinnkopf 25 wies eine Temperatur von 217 °C auf. Seine Zahnrad-Spinnpumpe 28 war auf eine Förderleistung von 500 g/h eingestellt. Im Spinnpaket 29 durchströmte die Schmelze ein Siebgewebe von 40 µm Maschenweite und eine 5 mm dicke Sintermetallplatte von 150 µm Korngröße, bevor sie aus fünf Bohrungen einer Spinndüse 30 als Schmelzestrahl austrat. Die Bohrungen wiesen 0,5 mm Durchmesser und 1,0 mm Kapillarlänge auf. Die fünf sich verfestigenden Filamente 27 passierten eine Nachheizzone 35 von 100 mm Länge und 100 °C Temperatur.

Danach traten sie in den Kühlschacht 26 ein. In diesem kühlte ein durch Absaugen (37) entstandener, aus der Raumluft mit 20 °C gespeister, quer zum Fadenlauf mit 0,3 m/s bewegter Luftstrom die Filamente 27 so weit, daß diese an der Präparierdüse 40 als verfestigter Faden 42 gebündelt und präpariert werden konnten. Der Gesamtabstand zwischen der Spinndüse 30 und der Präparierdüse 40 betrug in diesem Falle ca. 2 m.

Mit dem Galettenduo 1 (41, 41') wurde der Faden 42 mit 50 m/min aus der Spinnzone abgezogen und mit leichter Anspannung durch Duo 2 (45, 45') mit 55 m/min und Duo 3 (46, 46') mit 60 m/min dem Wickler 43 zugeführt und mit 66 m/min als Spule 44 aufgewikkelt.

Die Fäden wiesen eine Feinheit von Tt = 1284 dtex, eine Reißfestigkeit von R_{H} = 0,56 cN/dtex, eine Reißdehnung von ε_{H} = 875 %, eine Bruchspannung R_{B}, berechnet nach der Formel R_{B} = R_{H} (1+ε_{H}/100%) von R_{B} = 5,46 cN/dtex und einen elastischen Dehnanteil nach 3 x 300 % zyklischer Dehnbelastung von ε_{e1.3} = 87,8 % auf.

### Beispiel 2

Fünf Filamente, die in gleicher Weise wie im Beispiel 1 hergestellt worden waren, wurden vom Duo 1 mit 250 m/min abgezogen, über Duo 2 mit 275 m/min und Duo 3 mit 300 m/min dem Wickler zugeführt und dort mit 283 m/min als Faden zur Spule 44 aufgewickelt.

Die entsprechenden Eigenschaftswerte betrugen:
Tt = 304 dtex; R_{H} = 0,69 cN/dtex; ε_{H} = 469 %; R_{B} = 3,93 cN/dtex, und ε_{e1.3} = 78,0 %.

Dieser Faden wurde danach auf der Spule 44 24 Stunden bei 30 °C unter Vakuum getrocknet und 1 Stunde bei 120 °C wärmebehandelt. Nach dieser Behandlung wies er folgende Eigenschaftswerte auf:
Tt = 269 dtex; R_{H} = 0,58 cN/dtex; ε_{H} = 756 %; R_{B} = 4,96 cN/dtex; und ε_{e1.3} = 87,0 %.

### Beispiel 3

Die Bedingungen für die Prepolymerherstellung entsprachen denen von Beispiel 1 und 2.

Gegenüber diesen Beispielen wurden jedoch einerseits die Förderleistung der Spinnpumpe auf 300 g/h herabgesetzt (Beispiele 3a, 3b), andererseits der Extruderdurchsatz auf 1,0 kg/h erhöht (Beispiel 3b).

Die Differenz des Schmelzestromes wurde vor dem Spinnkopf durch ein Bypassventil ausgeschleust.

Mit Erhöhung des Extruderdurchsatzes von 0,5 auf 1,0 kg/h erfolgte bei gleichen sonstigen Bedingungen eine Anhebung der Heizzonentemperaturen. Die maximale Heizzonentemperatur am Extruder betrug nunmehr 190 °C, die des Spinnkopfes wurde von 217 auf 221 °C erhöht. Alle übrigen Einstellungen entsprachen dem Beispiel 1.

Es wurden folgende Fadeneigenschaften festgestellt, wobei
- m_{Ex}: Extruderdurchsatz und
- m_{Sp}: Spinnpumpendurchsatz
bedeutet. Die Differenzmenge zwischen Extruderdurchsatz und Spinnkopfdurchsatz wurde vor dem Spinnkopf ausgeschleust.

| | m_{Ex} g/h | m_{Sp} g/h | Tt dtex | R_{H} cN/dtex | ε_{H} % | R_{B} cN/dtex | ε_{e1.3} % |
|---|---|---|---|---|---|---|---|
| 3a | 500 | 300 | 722 | 0,51 | 744 | 4,30 | 86,2 |
| 3b | 1000 | 300 | 718 | 0,49 | 759 | 4,21 | 83,1 |

## Patentansprüche

1. Verfahren zum Schmelzspinnen von Polyurethan und/oder Polyurethanharnstoff, bei dem ein Prepolymer aus einem polymeren Diol und einem organischen Diisocyanat hergestellt und anschließend zu diesem Prepolymer ein Gel- und/oder Schmelzhilfsmittel und ein Kettenverlängerer zugegben wird,
wobei
a) das Prepolymer bei 50 bis 150 ° C durch Vermischen hergestellt,
b) anschließend das Temperaturniveau um 5 bis 50 °C abgesenkt und nach Absenkung des Temperaturniveaus das Gel- und/oder Schmelzhilfsmittel im flüssigen Zustand zugegeben wird,
c) dieses Prepolymer unter Erhaltung seines schmelzflüssigen Zustandes unter Rühren mit einem Kettenverlängerer versetzt wird,
d) dieses Prepolymer im schmelzflüssigen Zustand einem Extruder zugeführt wird, wobei im Extruder bei erhöhter Temperatur die Polymerisation erfolgt, und
e) diese Polymerschmelze über Spinndüsen zu Polyurethan- und/oder Polyurethanharnstofffäden versponnen wird.

2. Verfahren nach Anspruch 1, **dadurch gekennzeichnet, daß** bei der Herstellung des Prepolymers (Verfahrensschritt a) zuerst das polymere Diol in flüssigem Zustand vorgelegt und daß dann die organische Diisocyanatkomponente in flüssigem oder schmelzflüssigem Zustand unter Rühren zugemischt und die Reaktion bis zur volständigen oder nahezu vollständigen Umsetzung geführt wird.

3. Verfahren nach Anspruch 1 oder 2, **dadurch gekennzeichnet, daß** ein Mol-Verhältnis von Diol zu Diisocyanat von 1 : 1,1 bis 1 : 10,0 eingehalten wird.

4. Verfahren nach mindestens einem der Ansprüche 1 bis 3, **dadurch gekennzeichnet, daß** der Kettenverlängerer (Verfahrensschritt c) unter Konstanthaltung der Schmelzetemperatur zugemischt wird.

5. Verfahren nach mindestens einem der Ansprüche 1 bis 4, **dadurch gekennzeichnet, daß** der Kettenverlängerer und/oder die Additive gleichzeitig mit dem Gel- und/oder Schmelzhilfsmittel oder direkt in den Extruder zugesetzt wird/werden.

6. Verfahren nach mindestens einem der Ansprüche 1 bis 5, **dadurch gekennzeichnet, daß** dem Prepolymer beim Verfahrensschritt a, b und/oder c Additive wie Stabilisatoren, Weichmacher, Gleitmittel, Spinnhilfsmittel, Flammschutzmittel, Pigmente, Farbstoffe, Farbhilfsstoffe oder Emulgatoren zugesetzt werden.

7. Verfahren nach mindestens einem der Ansprüche 1 bis 6, **dadurch gekennzeichnet, daß** mit einem Doppelschneckenextruder gearbeitet wird.

8. Verfahren nach mindestens einem der Ansprüche 1 bis 7, **dadurch gekennzeichnet, daß** das Prepolymer, das nach dem Verfahrensschritt c erhalten wird, im flüssigen oder festen, wieder aufschmelzbaren Zustand zwischengelagert und bei Bedarf dem Extruder zugeführt wird.

9. Verfahren nach mindestens einem der Ansprüche 1 bis 8, **dadurch gekennzeichnet, daß** die Polymerschmelze, die nach Verfahrensschritt d nach der Extruderbehandlung erhalten wird, in den festen granulierten Zustand überführt wird, so daß sie lagerfähig ist, und daß dieses feste Polymerprodukt bei Bedarf wieder aufgeschmolzen und dann versponnen wird.

10. Verfahren nach mindestens einem der Ansprüche 1 bis 9, **dadurch gekennzeichnet, daß** das Filament/die Filamente nach Verlassen der Spinndüse(n) durch einen Kühlschacht geführt wird/werden.

11. Verfahren nach mindestens einem der Ansprüche 1 bis 10, **dadurch gekennzeichnet, daß** das Filament/die Filamente nach Verlassen der Spinndüse(n) vor dem Kühlschacht durch eine Nachheizzone geführt wird/werden.

12. Verfahren nach mindestens einem der Ansprüche 1 bis 11, **dadurch gekennzeichnet, daß** vor dem Kühlschacht anstelle einer Nachheizzone eine Beschleierung mit heißer Luft/Inertgas vorgenommen wird.

13. Verfahren nach mindestens einem der Ansprüche 1 bis 12, **dadurch gekennzeichnet, daß** die Schmelzeviskosität vor der Zuführung in den Spinnkopf, gemessen bei der Temperatur der Schmelzeleitung, im Bereich von 150 bis 10.000 Pas liegt.

14. Verfahren nach mindestens einem der Ansprüche 1 bis 13, **dadurch gekennzeichnet, daß** als Gel- und/oder Schmelzhilfsmittel ein Carbonsäureamid eingesetzt wird.

15. Verfahren nach Anspruch 14, **dadurch gekennzeichnet, daß** als Carbonsäureamid ε-Caprolactam eingesetzt wird.

16. Verfahren nach mindestens einem der Ansprüche 1 bis 15, **dadurch gekennzeichnet, daß** ein Anteil des polaren Gel- und/oder Schmelzhilfsmittels von 1 bis 25 Masse-% am Prepolymer eingesetzt wird.

17. Verfahren nach mindestens einem der Ansprüche 1 bis 16, **dadurch gekennzeichnet, daß** als organisches Diisocyanat unverkapptes Diisocyanat eingesetzt wird.

18. Verfahren nach mindestens einem der Ansprüche 1 bis 16, **dadurch gekennzeichnet, daß** als organisches Diisocyanat verkapptes Diisocyanat eingesetzt wird.

19. Verfahren nach Anspruch 18, **dadurch gekennzeichnet, daß** als organisches Diisocyanat 1,6-Hexamethylendiisocyanat eingesetzt wird.

20. Verfahren nach mindestens einem der Ansprüche 1 bis 19, **dadurch gekennzeichnet, daß** als polymere Diole Dihydroxypolyether und/oder Dihydroxypolyester eingesetzt werden mit einer Molmasse von 1000 bis 3000 g/Mol und einem Molmassen-Verhältnis von M_{w}/Mₙ < 2,0.

21. Verfahren nach Anspruch 20, **dadurch gekennzeichnet, daß** Polytetrahydrofuran eingesetzt wird.

22. Verfahren nach mindestens einem der Ansprüche 1 bis 21, **dadurch gekennzeichnet, daß** als Kettenverlängerer eine Verbindung, ausgewählt aus der Gruppe aliphatische Dihydroxy-Verbindungen, aliphatische und/oder arylaliphatische Hydroxyamin-Verbindungen, aliphatische und/oder arylaliphatische und/oder aromatische Diamin-Verbindungen oder deren Mischungen, eingesetzt wird.

23. Vorrichtung zur Durchführung des Verfahrens nach mindestens einem der Ansprüche 1 bis 22,
wobei mindestens ein temperierbares Reaktionsgefäß (16) zur Herstellung des Prepolymers über mindestens eine temperierbare Zuführung (17), die mit mindestens einer Förderpumpe (18) betrieben wird, mit dem Einzugsschacht (20) eines Extruders (49) verbunden ist, daß der Ausgang des Extruders (49) über eine mit einer Pumpe (23) versehenen Schmelzeleitung (24) in den Spinnkopf (25) führt, der seinerseits in einen Kühlschacht (57) mündet, und daß der Kühlschacht (57) mit einer Spinnmaschine (56) verbunden ist.

24. Vorrichtung nach Anspruch 23, **dadurch gekennzeichnet, daß** der Extruder (49) ein Doppelschneckenextruder mit gleichsinnig laufenden Schnecken ist.

25. Vorrichtung nach Anspruch 24, **dadurch gekennzeichnet, daß** die Schnecken ein L/D-Verhältnis von 20 bis 60 aufweisen.

26. Vorrichtung nach mindestens einem der Ansprüche 21 bis 25, **dadurch gekennzeichnet, daß** der Kühlschacht (57) so ausgebildet ist, daß eine Belüftung des Filamentes bzw. der Filamente quer zur Laufrichtung möglich ist.

## Claims

1. Method of fusion spinning polyurethane and/or polyurethane urea, with which method a prepolymer is prepared from a polymeric diol and an organic diisocyanate and, subsequently to preparation of that prepolymer, a gel and/or auxiliary melting agent and a chain lengthener are added,
a) the prepolymer being prepared at 50 to 150°C by mixing,
b) the temperature level being subsequently reduced by 5 to 50°C and the gel and/or auxiliary melting agent being added in liquid condition after lowering of the temperature level,
c) a chain lengthener being, under stirring, added to that prepolymer while the molten, liquid condition of the latter is maintained,
d) that prepolymer being, in its molten, liquid condition, supplied to an extruder, in which case polymerisation is effected in the extruder at an elevated temperature, and
e) that polymer melt being, through spinning nozzles, spun to form threads of polyurethane and/or polyurethane urea.

2. Method according to Claim 1, **characterised in that**, with preparation of the prepolymer (Method Step a), the polymeric diol is first presented in liquid condition and that, then, the organic diisocyanate component is admixed in liquid or molten, liquid condition under stirring and the reaction is continued up to complete or almost complete conversion.

3. Method according to Claim 1 or 2, **characterised in that** a mol ratio of diol to diisocyanate of 1 : 1.1 to 1 : 10.0 is adhered to.

4. Method according to at least one of Claims 1 to 3, **characterised in that** the chain lengthener (Method Step c) is admixed while the melt temperature is kept constant.

5. Method according to at least one of Claims 1 to 4, **characterised in that** the chain lengthener and/or the additive is/are simultaneously added with the gel and/or auxiliary melting agent or directly into the extruder.

6. Method according to at least one of Claims 1 to 5, **characterised in that**, with Method Step a, b, and/or c, additives like stabilisers, plasticisers, slip agents, auxiliary spinning agents, flameproofing agents, pigments, dye stuffs, auxiliary dye stuffs, or emulsifiers are added to the prepolymer.

7. Method according to at least one of Claims 1 to 6, **characterised in that** a twin-screw extruder is worked with.

8. Method according to at least one of Claims 1 to 7, **characterised in that** the prepolymer obtained after Method Step c is intermediately stored in liquid or solid, re-meltable condition and supplied to the extruder in case of need.

9. Method according to at least one of Claims 1 to 8, **characterised in that** the polymer melt obtained after Method Step d, subsequently to the extruder treatment, is transformed into the solid, granulated condition so that it can be stored and that that solid polymerisate is, in case of need, re-melted and then spun.

10. Method according to at least one of Claims 1 to 9, **characterised in that** the filament/the filaments, after having left the spinning nozzle(s), is/are guided through a cooling shaft.

11. Method according to at least one of Claims 1 to 10, **characterised in that** the filament/the filaments, after having left the spinning nozzle(s), is/are, before passing through the cooling shaft, guided through a secondary heating zone.

12. Method according to at least one of Claims 1 to 11, **characterised in that**, before the passage through the cooling shaft, fogging with hot air/inert gas is effected instead of guidance through a secondary heating zone.

13. Method according to at least one of Claims 1 to 12, **characterised in that** the melt viscosity is, before the supply into the spinning head and measured at the temperature of the melt line, within the range of 150 to 10,000 Pa.s.

14. Method according to at least one of Claims 1 to 13, **characterised in that** a carboxylic acid amide is used as a gel and/or auxiliary melting agent.

15. Method according to Claim 14, **characterised in that** ε-caprolactam is used as a carboxylic acid amide.

16. Method according to at least one of Claims 1 to 15, **characterised in that** a proportion of the polar gel and/or auxiliary melting agent and of 1 to 25 % by mass is used on the prepolymer.

17. Method according to at least one of Claims 1 to 16, **characterised in that** uncapped diisocyanate is used as an organic diisocyanate.

18. Method according to at least one of Claims 1 to 16, **characterised in that** capped diisocyanate is used as an organic diisocyanate.

19. Method according to Claim 18, **characterised in that** 1.6-hexamethylene diisocyanate is used as an organic diisocyanate.

20. Method according to at least one of Claims 1 to 19, **characterised in that**, as polymeric diols, dihydroxypolyether and/or dihydroxypolyester are used, having a molar mass of 1,000 to 3,000 gms/mol and a molar mass ratio of M_{w}/Mₙ<2.0.

21. Method according to Claim 20, **characterised in that** polytetrahydrofurane is used.

22. Method according to at least one of Claims 1 to 21, **characterised in that**, as a chain lengthener, a compound selected from the group of aliphatic dihydroxy compounds, aliphatic and/or arylaliphatic hydroxyamine compounds, aliphatic and/or arylaliphatic and/or aromatic diamine compounds or their mixtures is used.

23. Device for performing the Method according to at least one of Claims 1 to 22, at least one thermostatable reaction vessel (16) for preparing the prepolymer being connected through at least one thermostatable feeder (17), which is operated by means of at least one feed pump (18), to the feed shaft (20) of an extruder (49); the outlet of the extruder (49) leading, through a melt line (24) provided with a pump (23), into the spinning head (25) opening, in its turn, into a cooling shaft (57), and the cooling shaft (57) being connected to a spinning machine (56).

24. Device according to Claim 23, **characterised in that** the extruder (49) is a twin-screw extruder with its screws running in the same direction

25. Device according to Claim 24, **characterised in that** the screws show an L/D ratio of 20 to 60.

26. Device according to at least one of Claims 21 to 25, **characterised in that** the cooling shaft (57) is so designed that ventilation of the filament resp the filaments, transversely to running direction, is possible.

## Revendications

1. Procédé en vue de la filature à chaud de polyuréthanne et/ou de polyuréthanne-urée, dans lequel on prépare un prépolymère à partir d'un diol polymère et d'un diisocyanate organique, et on ajoute à ce prépolymère un agent gélifiant et/ou un agent activateur de la fusion et un agent de prolongation de chaînes,
a) le prépolymère étant préparé par mélange à une température de 50 à 150°C,
b) le niveau de température étant abaissé ensuite de 5 à 50°C et, après abaissement du niveau de température, un agent de gélifiant et/ou un agent activateur de la fusion étant ajouté(s) à l'état liquide,
c) ce prépolymère étant mélangé, avec maintien de son état de masse en fusion, sous agitation, à un agent de prolongation de chaînes,
d) ce prépolymère à l'état de masse en fusion étant acheminé à une extrudeuse, la polymérisation se faisant à température élevée dans l'extrudeuse,
e) cette masse de polymère étant filé par l'intermédiaire de filières pour former des fils de polyuréthanne et/ou de polyuréthanne-urée.

2. Procédé selon la revendication 1, **caractérisé en ce que**, lors de la préparation du prépolymère (étape de procédé a), l'on introduit initialement le diol polymère à l'état liquide et **en ce que** l'on ajoute par mélange le composant de diisocyanate organique à l'état liquide ou à l'état de masse en fusion, en agitant et **en ce que** la réaction est poursuivie jusqu'à l'achèvement complet ou presque complet de la réaction.

3. Procédé selon la revendication 1 ou 2, **caractérisé en ce que** l'on maintient un rapport molaire de diol à diisocyanate de 1 : 1,1 à 1 : 10,0.

4. Procédé selon au moins l'une des revendications 1 à 3, **caractérisé en ce que** l'agent de prolongation de chaîne (étape de procédé c) est mélangé en maintenant constante la température de fusion.

5. Procédé selon au moins l'une des revendications 1 à 4, **caractérisé en ce que** l'agent de prolongation de chaînes et/ou les additifs est/sont ajouté(s) simultanément à l'agent de gélification et/ou à l'agent activateur de la fusion ou directement à l'extrudeuse.

6. Procédé selon au moins l'une des revendications de 1 à 5, **caractérisé en ce que** l'on ajoute au prépolymère, lors de l'étape de procédé a, b, et/ou c, des additifs tels que des agents de stabilisation, des plastifiants, des lubrifiants, des agents d'aide à la filature, des agents ignifuges, des pigments, des colorants, des adjuvants tinctoriaux ou des émulsifiants.

7. Procédé selon au moins l'une des revendications 1 à 6, **caractérisé en ce que** l'on travaille avec une boudineuse à deux vis.

8. Procédé selon au moins l'une des revendications 1 à 7, **caractérisé en ce que** le prépolymère, qui est obtenu après l'étape de procédé c, subit un entreposage intermédiaire à l'état liquide ou solide, à nouveau fusible, et est acheminé, en cas de besoin, à l'extrudeuse.

9. Procédé selon au moins l'une des revendications 1 à 8, **caractérisé en ce que** la masse en fusion de polymère, qui est obtenue après traitement à l'extrudeuse à l'étape de procédé d, est convertie dans l'état solide granulé, de telle sorte qu'elle puisse être stockée et **en ce que** ce produit de polymère solide est à nouveau fondu, en cas de besoin, et est alors filé.

10. Procédé selon au moins l'une des revendications 1 à 9, **caractérisé en ce que** le filament/les filaments est/sont conduit(s) après sortie de la ou des filières, à travers un puits de refroidissement.

11. Procédé selon au moins l'une des revendications 1 à 10, **caractérisé en ce que** le filament/les filaments est/sont conduit(s), après la sortie de la ou des filières, avant le puits de refroidissement à travers une zone de chauffage secondaire.

12. Procédé selon au moins l'une des revendications 1 à 11, **caractérisé en ce que** l'on effectue, avant le puits de refroidissement, à la place d'une zone de chauffage secondaire, un balayage à l'aide d'air/de gaz inerte chaud.

13. Procédé selon au moins l'une des revendications 1 à 12, **caractérisé en ce que** la viscosité de la masse en fusion se situe, avant l'alimentation dans la tête de filature, dans le domaine de 150 à 10 000 Pas, la mesure étant effectuée à la température du conduit de la masse en fusion.

14. Procédé selon au moins l'une des revendications 1 à 13, **caractérisé en ce que** l'on utilise, en tant qu'agent de gélification et/ou d'agent activateur de la fusion, un amide d'acide carboxylique.

15. Procédé selon la revendication 14, **caractérisé en ce que** l'on utilise, en tant qu'amide d'acide carboxylique, la ε-caprolactame.

16. Procédé selon au moins l'une des revendications 1 à 15, **caractérisé en ce que** l'on utilise une proportion de l'agent de gélification et/ou d'agent activateur de la fusion de 1 à 25% en masse de prépolymère.

17. Procédé selon au moins l'une des revendications 1 à 16, **caractérisé en ce que** l'on utilise, en tant que diisocyanate organique, un diisocyanate non bloqué.

18. Procédé selon au moins l'une des revendications 1 à 16, **caractérisé en ce que** l'on utilise, en tant que diisocyanate organique, un diisocyanate bloqué.

19. Procédé selon la revendication 18, **caractérisé en ce que** l'on utilise, en tant que diisocyanate organique, le diisocyanate de 1,6-hexaméthylène.

20. Procédé selon au moins l'une des revendications 1 à 19, **caractérisé en ce que** l'on utilise, en tant que diols polymère, un dihydroxypolyéther et/ou un dihydroxypolyester, ayant une masse molaire de 1 000 à 3 000 g/mole et un rapport de masse molaire de M_{w}/Mₙ < 2,0.

21. Procédé selon la revendication 20, **caractérisé en ce que** l'on utilise le polytétrahydrofurane.

22. Procédé selon au moins l'une des revendications 1 à 21, **caractérisé en ce que** l'on utilise, en tant qu'agent de prolongation de chaînes, un composé, sélectionné parmi le groupe des composés dihydroxy aliphatiques, des composés hydroxyamino aliphatiques et/ou arylaliphatiques, des composés de diamine aliphatiques et/ou arylaliphatiques et/ou aromatiques ou de leurs mélanges.

23. Dispositif pour l'exécution du procédé selon au moins l'une des revendications 1 à 22, dans lequel au moins un réacteur (16) thermorégulé pour la préparation du prépolymère est raccordé au puits d'entrée (20) d'une extrudeuse (49), par l'intermédiaire d'au moins une alimentation (17), thermorégulée qui fonctionne à l'aide d'au moins une pompe d'alimentation (18), la sortie de l'extrudeus (49) conduisant, par l'intermédiaire d'un conduit de fusion (24) pourvue d'une pompe (23), à la tête de filature (25), qui, à son tour, débouche dans un puits de refroidissement (57), et le puits de refroidissement (57) étant raccordé à une machine à filer (56).

24. Dispositif selon la revendication 23, **caractérisé en ce que** l'extrudeuse (49) est une boudineuse à deux vis, ayant des vis tournant dans le même sens.

25. Dispositif selon la revendication 24, **caractérisé en ce que** les vis présentent un rapport L/D de 20 à 60.

26. Dispositif selon au moins l'une des revendications 21 à 25, **caractérisé en ce que** le puits de refroidissement (57) est réalisé de telle sorte que la ventilation du filament ou des filaments est possible perpendiculairement à la direction de déplacement.
